# EUROPÄISCHE PATENTSCHRIFT

(11) **EP 3 434 509 B1**
(45) Veröffentlichungstag und Bekanntmachung des Hinweises auf die Patenterteilung: **19.07.2023**
(21) Anmeldenummer: 17450008.2
(22) Anmeldetag: 24.07.2017
(51) Int. Cl.: B60M 1/26

(54) **SPANNWERK FÜR FAHRLEITUNGEN ELEKTRISCHER BAHNEN**
TENSIONER FOR CONTACT LINES OF ELECTRIC TRACKS
TENDEUR POUR CATÉNAIRES DE VOIES DE CHEMINS DE FER ÉLECTRIQUES

(43) Veröffentlichungstag der Anmeldung: 30.01.2019
(73) Patentinhaber: Kruch Railway Innovations GmbH & Co. KG, 1230 Wien (AT)
(72) Erfinder: Röhl, Jan, 1230 Wien (AT)
(74) Vertreter: Rippel, Andreas O.

(56) Entgegenhaltungen:
- CH-A- 128 883
- DE-A1-102006 019 304
- DE-C- 657 418
- GB-A- 1 080 230

## Beschreibung

Die Erfindung bezieht sich auf ein Spannwerk für Fahrleitungen elektrischer Bahnen, mit zwei durch Gewichte belastete Winkelhebeln, wobei an einem Winkelhebel der Fahrdraht, am anderen das Tragseil angreift.

Die Zugspannung von Fahrleitungen, wie sie z.B. in der CH 128 883 A oder der DE 10 2006 019304 A1 beschrieben sind, soll bei eintretenden Längenänderungen, z.B. infolge Temperaturschwankungen, gleichbleibend sein. Diese Forderung wird erfüllt durch den Einbau von Gewichtsspannwerken, die als Rollen- oder Hebelspannwerke ausgebildet sind.

Bekannte Spannwerke haben den Nachteil, daß bei plötzlichen, durch äußere Einflüsse in den Fahrleitungen verursachten Längenänderungen die Massenbeschleunigung der Gewichte erhebliche mechanische Beanspruchung in den Fahrleitungen, in den Tragkonstruktionen und in den Spannwerken selbst hervorruft. Der durch die lebendige Kraft des bewegten Gewichts verursachte Stoß auf die Fahrleitung kann dabei so erheblich werden, daß die Leitung zerreißt, Isolatoren brechen und andere Bauteile der Leitung beschädigt werden.

Dieser Nachteil tritt auch bei einem eingangs beschriebenen Spannwerk auf, das in der DE 657 418 C beschrieben ist.

Man hat schon vorgeschlagen, durch Einbau von Glyzerinzylindern diese Wirkungen zu mildern, jedoch waren zwei gesonderte Einrichtungen, je für Tragseil und Fahrdraht erforderlich.

Die Erfindung hat es sich zum Ziel gesetzt ein Spannwerk zu schaffen, bei dem die geschilderten Nachteile nicht auftreten.

Erreicht wird dies dadurch, daß an den Armen der Winkelhebel ein doppeltwirkender hydraulischer Stoßdämpfer angreift.

Doppeltwirkende hydraulische Stoßdämpfer sind z.B. aus der GB 1 080 230 A bekannt. Dort wird der Stoßdämpfer bei einer Steuerung von Fahrzeugscheinwerfern verwendet. In der DE 10 2006 019304 A1 erfolgt die Dämpfung insbesondere durch mechanische, hydraulische oder pneumatische Dämpferkomponenten.

Zweckmäßig greift nach einem weiteren Merkmal der Erfindung der Zylinder des Stoßdämpfers am Arm des einen Winkelhebels, der Kolben des Stoßdämpfers am Arm des anderen Winkelhebels an.

Die beiden Winkelhebel sind dabei nach entgegen gesetzten Richtungen schwenkend ausgebildet.

Eine Anpassung an verschiedene Gegebenheiten wird erfindungsgemäß dadurch erreicht, daß das Gewicht bzw. die Gewichte verstellbar am Arm bzw. an den Armen angreift bzw. angreifen.

Nachstehend ist die Erfindung anhand von in den Zeichnungen dargestellten Ausführungsbeispielen näher beschrieben, ohne auf diese Beispiele beschränkt zu sein. Dabei zeigen:
Fig. 1 In Seitenansicht ein erfindungsgemäßes Spannwerk, wobei die Fahrleitungen bei kühlerem Wetter wenig gedehnt sind;
Fig. 2 das Spannwerk nach Fig. 1 bei gedehnten Fahrleitungen;
Fig. 3 in größerem Maßstab einen Schnitt durch den doppeltwirkenden Stoßdämpfer mit seiner Befestigung an den Armen der Winkelhebel;
Fig. 4 ein Detail der Fig. 3 und
Fig. 5 ein weiteres Detail des Stoßdämpfers bei Stellung des Kolbens in der Mitte des Zylinders.

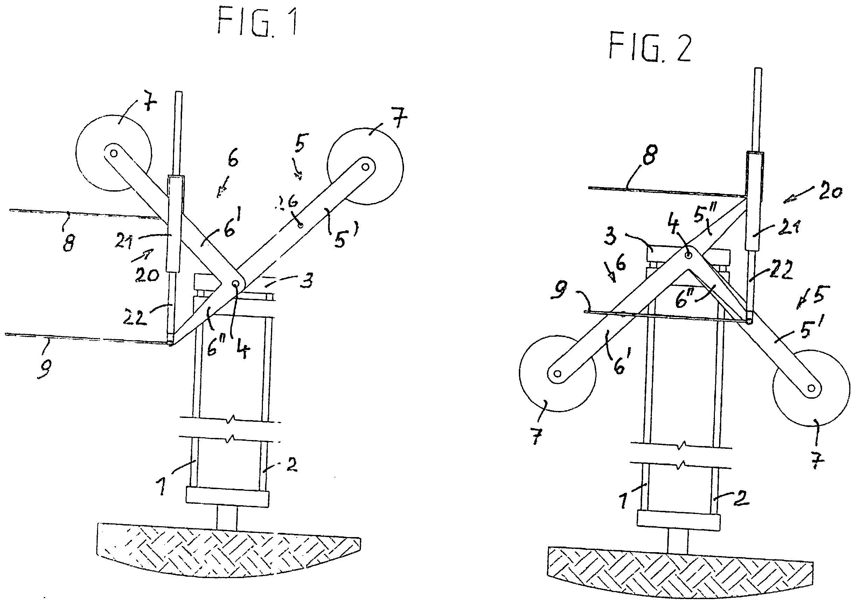

Gemäß den Fig. 1 und 2 ist der Fahrleitungsmast als Federnpaar mit zwei im Bereich ihrer Enden miteinander verbundenen Formrohren 1, 2 ausgebildet. Am oberen Ende der Formrohre 1, 2 ist ein Aufsteckträger 3 angeordnet, der mit einer Achse 4 versehen ist.

An der Achse 4 sind zwei Winkelhebel 5, 6 schwenkbar gelagert. Der Winkelhebel 5 schwenkt im Uhrzeigersinn, der Winkelhebel 6 entgegen dem Uhrzeigersinn.

An den längeren Armen 5' und 6' der Winkelhebel 5 und 6 ist je ein Gewicht 7 angeordnet.

Am kürzeren Arm 5" ist das Tragseil 8 der Fahrleitung und am kürzeren Arm 6" der Fahrdraht 9 der Fahrleitung befestigt.

Die Gewichte 7 halten die Fahrleitung 8, 9 unter Spannung. Bei einer Längenänderung der aus Tragseil 8 und Fahrdraht 9 bestehenden Fahrleitung, z.B. durch eine höhere Temperatur, schwenken die Winkelhebel nach unten um schließlich die Endlage nach Fig. 2 zu erreichen.

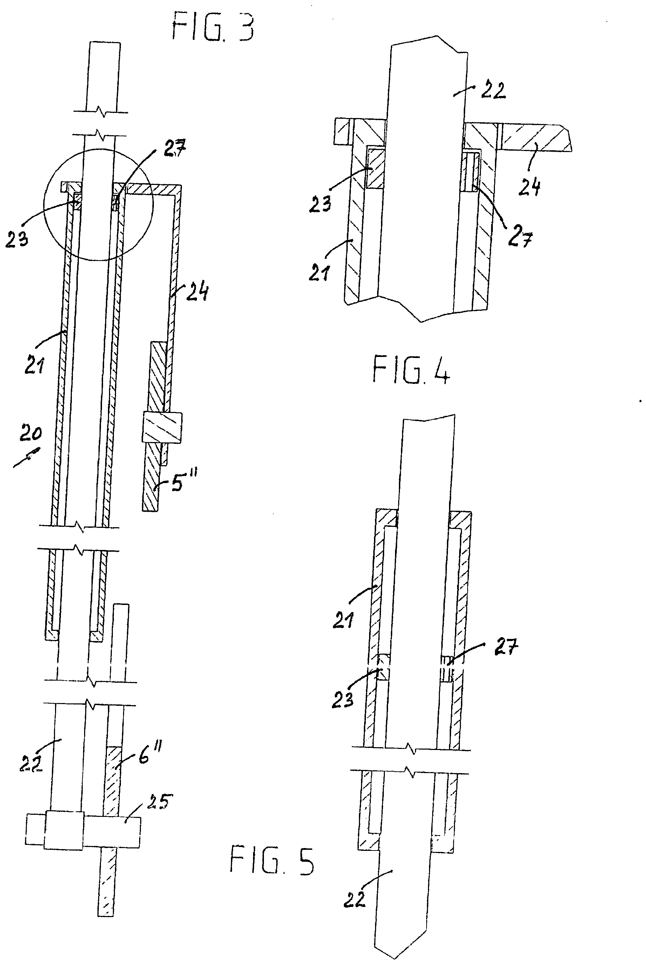

Diese Schwenkbewegung wird, auch bei einer plötzlichen Verringerung der Spannung der Fahrleitung, z.B. bei deren Bruch, durch einen doppeltwirkenden hydraulischen Stoßdämpfer 20 gedämpft, sodaß keine weiteren Schäden eintreten können. Durch eine Drosselbohrung 27 (sichtbar in den Fig. 3, 4 und 5) strömt das Hydrauliköl langsam von einer Kammer des Zylinders in die andere.

Dabei ist der Zylinder 21 des hydraulischen Stoßdämpfers 20 am kürzeren Arm 5", die Kolbenstange 22 am kürzeren Arm 6" angelenkt.

Gemäß Fig. 3 erfolgt die Anlenkung des Zylinders 21 am Arm 5" über einen winkelförmigen Teil 24. Die Kolbenstange 22 ist am Arm 6" über einen Bolzen 25 angelenkt.

In Fig. 1 sind Bohrungen 26 in den längeren Armen 5' und 6` eingetragen. Durch solche Bohrungen 26 wäre es möglich, die Gewichte 7 weiter innen zu befestigen, die Gewichte 7 wären damit verstellbar. Es wäre auch denkbar, die Gewichte 7 in Führungen (nicht dargestellt) zu verschieben um eine andere Gewichtswirkung zu erzielen. Ebenfalls möglich wäre es die Gewichte an Seilen aufzuhängen.

Im Rahmen der Erfindung sind zahlreiche Abänderungen möglich. So wäre die Anlenkung des doppeltwirkenden hydraulischen Stoßdämpfers 20 statt an den kürzeren Armen auch an den längeren Armen möglich. Der Stoßdämpfer kann auch zwischen den Hebeln 5' und 6' eingebaut werden (horizontal).

## Patentansprüche

1. Spannwerk für Fahrleitungen (8, 9) elektrischer Bahnen, mit zwei durch Gewichte (7) belastete Winkelhebeln (5, 6), wobei an einem Winkelhebel (6) der Fahrdraht (9), am anderen das Tragseil (8) angreift, **dadurch gekennzeichnet, daß** an den Armen (5", 6") der Winkelhebel (5, 6) ein doppeltwirkender hydraulischer Stoßdämpfer (20) angreift, wobei der Zylinder (21) des Stoßdämpfers (20) am Arm (5") des einen Winkelhebels (5), die Kolbenstange (22) des Stoßdämpfers (20) am Arm (6") des anderen Winkelhebels (6) angreift.

2. Spannwerk nach Anspruch 1 oder 2, **dadurch gekennzeichnet, daß** die beiden Winkelhebel (5, 6) nach entgegengesetzten Richtungen schwenkend ausgebildet sind.

3. Spannwerk nach einem der Ansprüche 1 bis 3, **dadurch gekennzeichnet, daß** das Gewicht bzw. die Gewichte (7) verstellbar am Arm bzw. an den Armen (5', 6') angreift bzw. angreifen.

## Claims

1. A tensioner for overhead contact lines (8, 9) of electrical railways, having two angle levers (5, 6) which are loaded by weights (7), wherein the contact wire (9) acts on one angle lever (6) and the messenger wire (8) acts on the other angle lever, **characterized in that** a dual-acting hydraulic shock absorber (20) acts on the arms (5", 6") of the angle levers (5, 6), wherein the cylinder (21) of the shock absorber (20) acts on the arm (5") of the one angle lever (5) and the piston rod (22) of the shock absorber (20) acts on the arm (6") of the other angle lever (6).

2. The tensioner according to Claim 1 or 2, **characterized in that** the two angle levers (5, 6) are configured to be pivotable in opposing directions.

3. The tensioner according to one of Claims 1 to 3, **characterized in that** the weight or the weights (7) acts or act in an adjustable manner on the arm or on the arms (5', 6').

## Revendications

1. Outil de serrage pour des lignes de contact (8, 9) de voies ferroviaires électriques, comprenant deux leviers angulaires (5, 6) chargés par des poids (7), dans lequel le fil de contact (9) engrène un levier angulaire (6), le câble porteur (8) engrène l'autre, **caractérisé en ce qu'**un amortisseur hydraulique (20) à double action engrène les bras (5", 6") des leviers angulaires (5, 6), dans lequel le cylindre (21) de l'amortisseur (20) sur le bras (5") de l'un levier angulaire (5) engrène la tige de piston (22) de l'amortisseur (20) sur le bras (6") de l'autre levier angulaire (6).

2. Outil de serrage selon la revendication 1 ou 2, **caractérisé en ce que** les deux leviers angulaires (5, 6) sont conçus se balançant vers des directions opposées.

3. Outil de serrage selon l'une des revendications 1 à 3, **caractérisé en ce que** le(s) poids (7) s'engrène(nt) de manière déplaçable sur le(s) bras (5', 6').
